# EUROPÄISCHE PATENTSCHRIFT

(11) **EP 0 762 947 B1**
(45) Veröffentlichungstag und Bekanntmachung des Hinweises auf die Patenterteilung: **26.03.2003**
(21) Anmeldenummer: 95917453.3
(22) Anmeldetag: 22.05.1995
(51) Int. Cl.: B23K 26/12, B23K 26/00

(54) **VORRICHTUNG ZUR MATERIALBEARBEITUNG MIT EINEM LASER**
DEVICE FOR MACHINING MATERIAL WITH A LASER
DISPOSITIF POUR L'USINAGE D'UN MATERIAU AU LASER

(30) Priorität: 30.05.1994 DE 4418845
(43) Veröffentlichungstag der Anmeldung: 19.03.1997
(73) Patentinhaber: SYNOVA S.A., 1024 Ecublens (CH)
(72) Erfinder: Richerzhagen, Bernold, 1025 Saint-Sulpice (CH)
(74) Vertreter: Roshardt, Werner Alfred, Dipl.-Phys.
(86) Internationale Anmeldenummer: IB9500390
(87) Internationale Veröffentlichungsnummer: WO95032834

(56) Entgegenhaltungen:
- EP-A- 0 450 313
- WO-A-90/02628
- WO-A-90/14195
- DE-A- 3 643 284

## Beschreibung

Die Erfindung betrifft ein Verfahren zur Materialbearbeitung gemäß dem Oberbegriff des Patentanspruchs 1 sowie eine Vorrichtung zur Durchführung des Verfahrens gemäss dem Oberbegriff des Patentanspruchs 5.

Die Laserstrahlung wird in vielfältiger Weise zur Materialbearbeitung in der Industrie - Schneiden, Bohren, Schweißen, Markieren und Materialabtragung - verwendet. Es sind nahezu alle Materialien wie z. B. Stahl, Stahllegierungen, NE-Metalle, Kunststoffe und Keramiken bearbeitbar.

Bei fast all diesen Verfahren wird der Laserstrahl mittels eines optischen Elements, wie z. B. einer Linse, auf das zu bearbeitende Material fokussiert, um die für den Bearbeitungsvorgang notwendige Intensität zu erzeugen. Aufgrund dieser zwingenden Strahlungsfokussierung war ein Arbeiten lediglich am Ort des Fokuspunkts oder in dessen unmittelbarer Umgebung möglich.

Aus der DE-A 36 43 284 ist ein Verfahren zum Schneiden eines Material mit einem Laserstrahl bekannt, bei dem dieser in einen auf das zu schneidende Material gerichteten Wasserstrahl eingekoppelt und innerhalb diesem geführt wurde. Die Strahlungszuführung erfolgte über einen Strahlungsleiter (Fiber), dessen eines Ende in den in einer Düse erzeugten Wasserstrahl hineinragte. Der Durchmesser des Wasserstrahls war größer als derjenige des Strahlungsleiters. Die bekannte Vorrichtung hatte den Nachteil, daß der Durchmesser des Wasserstrahls niemals kleiner sein durfte als derjenige des Strahlungsleiters.

Um jedoch eine hohe Intensität am Bearbeitungsort zu erhalten, ist ein möglichst kleiner Strahldurchmesser notwendig. Je kleiner der Strahldurchmesser, mit desto geringeren Ausgangsleistungen der Laserstrahlungsquelle kann gearbeitet werden. Je kleiner die Ausgangsleistung des Lasers, desto geringer sein Anschaffungspreis.

Ein weiterer Nachteil der Vorrichtung der DE-A 36 43 284 ergab sich durch das in den Wasserstrahl hineinragende Strahlungsleiterende. Unterhalb des Leiterendes bildete sich nämlich ein Totwassergebiet, welches u. a. Störungen in der Strömung erzeugte, welche sich über die Länge des Wasserstrahls exponentiell verstärkten und schließlich zu dessen Zertropfen führten. Daher war es mit dieser Vorrichtung unmöglich, laminare, kompakte Strahllängen von über 30 mm zu

Es wurde nun in der EP-A 0 515 983 versucht, die obigen Nachteile zu beheben, in dem eine Wasserdüse konstruiert wurde, welche den Strahlungsleiter nicht mehr direkt enthielt. Vor der den Wasserstrahl formenden Düse befand sich als Flüssigkeitsstauraum eine Wasserkammer mit einem Wassereinlaß und einer die Kammer gegenüber dem Düseneintritt abschließenden Fokussierlinse. Diese Fokussierlinse war Teil des optischen Systems, mit dem die aus einem Strahlungsleiter austretende Strahlung im Gegensatz zu unten beschriebenen Ausführungsformen der Erfindung in den Düsenkanal der Düse fokussierbar war. Die Kammer war derart ausgebildet, daß das in ihr befindliche Wasser für den Wasserstahl sich quasi im Stillstand, d.h. in einem entspannten Zustand befand. Die EP-A 0 515 983 verwendete in Anlehnung an die bekannten Wasserstahlschneidverfahren Wasser bei einer Strahlung eines Nd:YAG-Lasers.

Es hat sich nun gezeigt, daß die Ausführungsvariante der EP-A 0 515 983 unkontrollierbare Beschädigungen an der Wand der Düse im Umgebungsbereich des Düsenkanals hervorrief.

In der WO-A 90/02628 war ein Bearbeitungsmodul mit einer Fokussierlinse, mit der ein Laserstrahl direkt auf eine zu bohrende Materialoberfläche fokussiert wurde, beschrieben. Auf den Bearbeitungsort wurde mittels Bearbeitungsmodul ein ein abrasives Mittel enthaltender Gasstrom geführt. Auf die zu bearbeitende Oberfläche wurde femer ein die Laserstrahlung absorbierender Flüssigkeitsfilm mit dem Bearbeitungsmodul aufgebracht. Laserstrahl, Gasstrom und Flüssigkeitsstrom waren voreinander getrennt. Es fand keine Einkopplung des Laserstrahls in den Flüssigkeitsstrahl statt, welcher dann auf das zu bearbeitende Werkstück hätte geführt werden können. Die WO-A 90/02628 ist als gattungsfremd in Bezug auf den Erfindungsgegenstand zu betrachten.

Aufgabe der Erfindung ist es, eine Vorrichtung zu schaffen, mit der ein Laserstrahl optimal in einen Flüssigkeitsstrahl zur Materialbearbeitung einkoppelbar ist, ohne die den Flüssigkeitsstrahl erzeugende Düse durch die Strahlung des Lasers zu beschädigen.

Der Erfindung liegt die Erkenntnis zugrunde, daß der mit der Fokussieroptik in den Bereich der Düse fokussierte Laserstrahl je nach Intensitätsverteilung in der Flüssigkeit diese mehr oder weniger stark erwärmen kann. Flüssigkeitsbereiche mit unterschiedlichen Temperaturen, einem räumlichen Temperaturgradienten, weisen nicht nur eine räumlich spezifische Dichteverteilung, sondern auch eine räumliche Brechungsindexverteilung auf. D. h. Flüssigkeiten mit einem räumlichen Temperaturgradienten reagieren optisch als Linse und im Fokussierkegel eines fokussierten Laserstrahls in der Regel als Zerstreuungslinse.

Eine "zeichnerisch optimale" Einkopplung der Laserstrahlung in einen in einem Düsenkanal erzeugten Flüssigkeits-(Wasser-)-Strahl, wie in Figur 2 der EP-A 0 515 983 gezeigt, wirkt nun leider nicht so wie vermutet. Bei der in der EP-A 0 515 983 gezeigten Anordnung bildete sich nämlich im Bereich der Fokussierkegelspitze oberhalb des Düsenkanaleintritts eine thermische Linse aus, welche den dort gezeigten Ort des Fokuspunkts nach oben verschob sowie den Fokusdurchmesser stark vergrößerte. Hierdurch traf ein Teil der Laserstrahlung im Fokussierkegel auf die Düsenwandung, insbesondere auf die dem dort verwendeten Flüssigkeitsstauraum zugewandte Düsenoberfläche. Durch die hohe Intensität, welche nun einmal für die Materialbearbeitung benötigt wird, wurde nun die Wandung der Düse beschädigt.

Nachteilig wirkte sich bei der aus der EP-A 0 515 983 bekannten Konstruktion zudem aus, daß als Flüssigkeit Wasser und als Laserstrahlung diejenige eines ND:YAG von 1,064 µm verwendet wurde. Diese Strahlung wies nun gerade in Wasser eine nicht zu vernachlässigende Absorption auf. Der Wasserbereich im oberen Bereich der Pyramidenspitze der fokussierten Strahlung (Spitzenbereich des Fokussierkegels) wurde entsprechend der Intensitätsverteilung (hohe Intensität in der Achse und geringe an den Rändern) erhitzt und es entstand die oben vorausgesagte thermische Linse, welche zu Beschädigungen der Düsenwandung, insbesondere der Düsenoberfläche im Bereich des Düseneintritts und ietztendlich zur Zerstörung der den Flüssigkeitsstrahl erzeugenden Düse führte.

Nicht nur die Verwendung von Wasser verschlechterte den Einkopplungswirkungsgrad, sondern auch die gesamte konstruktive Gestaltung der Flüssigkeitskammer vor dem Düseneintritt. Es wurden nämlich, wie auf Seite 7, Zeilen 32 ff. und Seite 9, Zeilen 41 ff. ausgeführt ist, Anstrengungen unternommen, vor dem Düseneintritt möglichst einen Stillstand der Flüssigkeit zu erreichen. Gerade dieser Flüssigkeitsstillstand ermöglichte bzw. verstärkte die Ausbildung der thermischen Linse. Es wurde nämlich die durch (bereits geringe) Strahlungsabsorption erwärmte Flüssigkeit nicht schnellstens weggeführt, damit sie sich nicht noch stärker erwärmen konnte, wodurch der Linseneffekt reduziert worden wäre, sondern im Gegenteil erfolgte durch die fortschreitende Erwärmung noch eine Verstärkung der Brechkraft einer sich bildenden thermischen Linse.

Einen anderen Weg geht jedoch die Erfindung. Hier wird alles daran gesetzt, daß möglichst keine thermische Linse entstehen kann bzw. deren Wirkung stark minimiert wird. In der Erfindung wird eine Flüssigkeit verwendet, welche eine möglichst kleine Absorption bei der verwendeten Laserstrahlung hat, nämlich ein Silikonöl bei der Strahlung des ND:YAG-Lasers.

Ferner ist der konstruktive Aufbau des die Düsenanordnung und die Fokussiereinheit enthaltenden Bearbeitungsmoduls derart gewählt, daß auch bei einer nicht zu vernachlässigenden kleinen Strahlungsabsorption der Effekt einer thermischen Linse, sofern er überhaupt auftreten sollte, minimal und somit vernachlässigbar bleibt.

Die Erfindung schlägt nämlich vor, die Flüssigkeit aus dem Bereich des Fokussierkegels der Laserstrahlung, insbesondere aus dessen Spitzenbereich möglichst schnell herauszubringen, um eine Aufwärmzeit so klein wie irgend möglich zu halten. Die besten Ergebnisse werden selbstverständlich bei einer kurzen Verweilzeit der Flüssigkeit im Fokussierkegel mit einer geringen Absorption erreicht.

Um die obigen Bedingungen zu erreichen, wird die in der EP-A 0 515 983 verwendete Flüssigkeitskammer mit dem dort propagierten, die Flüssigkeit im Stillstand haltenden Flüssigkeitsstauraum vollständig vermieden. Die die Höhe der Flüssigkeitszuführung zur Düse weist etwa den Durchmesser des Düsenkanals auf oder ist nur geringfügig größer, um lediglich Strömungsverwirbelungen zu verringern.

Auch wird bei einer bevorzugten Ausführungsvariante in die zum Düseneintritt gegenüberliegende Wandung keine Fokussierlinse, wie bei der EP-A 0 515 983, eingebaut, sondern lediglich ein Fenster, welches die Laserstrahlung verlustfrei transmittiert. Nur durch dieses nahezu unmittelbar über dem Düseneintritt liegende Fenster ist es möglich, das Flüssigkeitsvolumen in der Spitze des Fokussierkegels so klein wie nur irgend möglich und die Strömungsgeschwindigkeit so hoch wie nur irgend möglich zu halten.

In einer weiteren bevorzugten Ausführungsvariante ist der Flüssigkeitseintrittsrand des Düsenkanals scharfkantig ausgebildet. Infolge dieser scharfen Kante bildet sich eine Flüssigkeitsstrahlablösung an der Einlaßkante mit einem Luftpolster zwischen dem Flüssigkeitsstrahl und der Düsenkanalwandung aus. Luft hat einen kleineren Brechungsindex als die üblichen zu verwendenden Düsenmaterialien wie Quarz oder Saphir. Auch ist der Brechungsindex von Luft kleiner als derjenige der zu verwendenden Flüssigkeiten, d. h. es bildet sich ein Flüssigkeitsstrahl aus, der als nahezu idealer Strahlungsleiter wirkt. Die im Flüssigkeitsstrahl geführte Laserstrahlung ist somit von der Düsenwand "isoliert".

Das Luftpolster bewährt sich insbesondere dann, wenn der Brechungsindex des die Strahlung führenden Flüssigkeitsstrahls kleiner ist als derjenige der Düse, da dann ein Strahlungsübertritt erfolgen könnte. Ist der Brechungsindex der Flüssigkeit größer als derjenige des Düsenmaterials so tritt zwar an der Grenzfläche zwischen den beiden Medien (Flüssigkeit/Düsenwand) Totalreflexion auf, die Strahlung tritt jedoch bis zur sog. Endringtiefe ("frustrated-totalinternal-reflection", "Goos-Hänchen-Shift") in das andere Material ein. Weist das Material der Düse dann einen bei der verwendeten Strahlung nicht mehr zu vernachlässigenen Absorptionskoeffizienten auf, so verhindert das Luftposter auch hier ein Eindringen der Strahlung und damit eine Beschädigung der Düsenwandung.

Dank der Ausbildung dieses Luftpolsters können sogar die Laserstrahlung absorbierende Materialien für die Düse verwendet werden, da das Polster diese von der Düsenwandung fernhält. Ferner ist hierdurch eine Justage des Fokussierkegels auf die Düsenkanalachse nicht mehr zwingend notwendig, da durch dieses Luftpolster die Strahlung auch bei einer geringen Dejustage die Düsenkanalwandung nicht mehr erreichen kann. Der Winkel des Fokussierkegels kann nun derart gewählt werden, daß er dem theoretischen Wert der numerischen Apertur des Flüssigkeitsstrahls entspricht.

Wird z. B. als Flüssigkeit ein Öl aus der Gruppe der Silikonöle, wie z. B. ein Polydimethylsiloxan oder ein Polymethylphenylsiloxan und Quarz als Düsenmaterial verwendet, so ist der Brechungsindex der Flüssigkeit höher als derjenige des Düsenmaterials. Der Düsenkanal erhält nun auch bei fehlendem Luftpolster die Eigenschaft eines Strahlungsleiters. In diesem Fall ist die Länge und Form des Düsenkanals unkritisch für die Strahlungsleitung. Es könnten sogar lange und gebogene Düsenkanäle realisiert werden.

Anstelle von Silikonöl können selbstverständlich auch andere elektrisch leitende sowie insbesondere elektrisch nichtleitende Flüssigkeiten verwendet werden. Sie sind derart auszuwählen, daß deren Absorption für die verwendete Laserwellenlänge sich mit Blick auf die in den Zuführungen im Umgebungsbereich der Düse erreichbaren Fließgeschwindigkeiten zur Vermeidung einer thermischen Linse in einem vertretbaren Rahmen halten. Als verwendbare Flüssigkeiten wird hier insbesondere auf diejenigen Flüssigkeiten hingewiesen, die bei Flüssigkeitsfasern eingesetzt werden.

Die vorgeschlagene Anordnung ermöglicht Flüssigkeitsstrahllängen von über 200 mm. Wird nämlich eine störungsfreie Strömung am Einlauf zum Düsenkanal gewährleistet, kann der Flüssigkeitsdruck gesteigert werden und die kompakte Flüssigkeitsstrahllänge steigt auf ein Maximum an, welches vor allem von der verwendeten Flüssigkeit und dem Düsendurchmesser abhängt. So ergibt sich z. B. für Wasser und einen Düsenkanaldurchmesser von 150 µm eine maximale kompakte Strahllänge von 150 mm bei 80 bar Flüssigkeitsdruck. Wird anstelle von Wasser ein Silikonöl verwendet, kann die kompakte Flüssigkeitsstrahllänge auf bis zu 500 mm gesteigert werden. Als kompakte Flüssigkeitsstrahllänge wird die Länge vor Beginn des "Zertropfens" bezeichnet. Dieses Zertropfen beruht auf nicht vermeidbaren Verwirbelungen, hervorgerufen durch die Umgebungsluft sowie die Oberflächenspannung.

Die Zerfallslänge des Flüssigkeitsstrahls läßt sich über den Druck der Flüssigkeit vor dem Eintritt in den Düsenkanal variieren. Eleganter ist jedoch das gezielte Einbringen einer Störung in die Flüssigkeit unmittelbar vor dem Düsenkanaleingang. Dies kann z. B. mit einem Piezoelement erfclgen, welches Druckstöße einer vorgegebenen Frequenz und Amplitude auf die Flüssigkeit ausübt. Die Länge des Flüssigkeitsstrahls ist dann von diesen Parametern abhängig. Die Einstellung der Flüssigkeitsstrahllänge ist dann wichtig, wenn Schichten unterhalb des zu bearbeitenden Materials vom Laserstrahl nicht getroffen werden sollen.

Des weiteren ist die Absorption des obigen Öls in einem weiten Wellenlängenbereich der Strahlung niedriger als diejenige von Wasser, so daß zum einen die Arbeitslänge nicht mehr durch die Absorption in der Flüssigkeit beschränkt wird, und zum anderen der Effekt der thermischen Linse vor der Düse vermieden bzw. sehr stark reduziert wird. Gleichzeitig ist eine Schutzwirkung vor Korrosion während und nach der Bearbeitung des Werkstücks gegeben.

Silkonöle besitzen eine Reihe für diese Art der Materialbearbeitung vorteilhafte Eigenschaften. Sie haben nämlich eine ausgezeichnete Oxidations-, Hydrolyse und Witterungsbeständigkeit. Auch weisen sie eine chemische Indifferenz auf, welche eine Korrosionsgefahr ausschließt. Sie zeichnen sich ferner durch eine äußerst geringe Brennbarkeit sowie eine hohe Kompressibilität aus.

Infolge der großen Länge eines Flüssigkeitsstrahls mit nahezu konstanter, hoher Strahlungsintensität ergibt sich eine um ein Vielfaches vergrößerte Arbeitslänge. Damit sind u. a. mehrschichtige Objekte, z. B. Objekte aus zwei Glasplatten mit einem Luftabstand, ... bearbeitbar, da der die hochenergetische Laserstrahlung führende Flüssigkeitsstrahl aus einer Schnittfuge oder einem Loch austretend, seine Eigenschaft als Strahlungsleiter weitgehend beibehält.

Eine optimale Einkopplung der Laserstrahlung wird erreicht, wenn der Fokuspunkt in die Ebene der Düsenöffnung gelegt wird. Die der Düsenöffnung zugewandte Unterseite des die Laserstrahlung transmittierenden Fensters sollte sich in einem Abstand vom 200 um bis 500 µm bei einem Düsendurchmesser von 100 µm befinden. Hierdurch wird ein die Ausbildung einer thermischen Linse begünstigender Flüssigkeitsstauraum vermieden.

Darüber hinaus erlaubt der in dem Flüssigkeitsstrahl geführte Laserstrahl parallele Schnittkanten. Hierdurch sind größere Materialstärken u. a. bei einem geringeren Materialverlust bearbeitbar.

Durch die Einkopplung des Laserstrahls in den Flüssigkeitsstrahl spielt die Strahlqualität des Lasers, welche u. a. durch eine Strahlführung in einem Strahlungsleiter verschlechtert wird, eine untergeordnete Rolle. Hierdurch sinken die Anschaffungskosten des Lasers. Ein Strahlungsleiter zur Strahlführung von der Laserquelle zu einem Einkopplungsort innerhalb des Bearbeitungsmoduls löst zudem sämtliche Sicherheitsprobleme der Strahlführung für den Benutzer. Bei der konventionellen Strahlfokussierung nur mit einem Fokussiersystem ohne Flüssigkeitsstrahl würde die schlechtere Strahlqualität zu einer noch kürzeren Arbeitslänge führen.

Die Verwendung eines Strahlungsleiters, ausgehend von der Laserquelle, die geringen geometrischen Abmessungen der Einkopplungsanordnung und die nicht mehr benötigte präzise Kontrolle eines Arbeitsabstands zwischen Fokussiereinheit und zu bearbeitender Werkstückoberfläche ergeben eine einfache Verschiebeanordnung des Bearbeitungsmoduls.

Die bei der konventionellen Strahlfokussierung auftretende Gefahr einer Verschmutzung der Fokussieroptik bzw. eines sie schützenden Schutzglases durch aufspritzendes, abgetragenes Material des Werkstücks entfallen. Ferner gewährt die Flüssigkeit des Flüssigkeitsstrahls ein sehr effizientes Kühlen der Bearbeitungszone, so daß keine thermische Belastung des Werkstücks an dessen Bearbeitungskanten auftreten kann. z. B. kann sich das Material nun auch nicht mehr beim Schneiden schmaler Stege verziehen. Außerdem führt diese Kühlung zu einer nur sehr geringen Aufhärtung der Bearbeitungszone, wodurch ein Nachbearbeiten, z. B. ein nachträgliches Gewindeschneiden, einfach durchzuführen ist.

Gleichzeitig wird eine Gas- und Staubentwicklung vermieden, da die Flüssigkeit das abgetragene Material bindet. Hierdurch entfallen teure Abluftfilteranlagen.

Es werden ferner Abbranderscheinungen durch die auftreffende Flüssigkeit vermieden oder stark verringert. Die Bearbeitungsqualität ist sehr gut. Auch kann durch eine geeignete Wahl der Flüssigkeit ein Korrosionsschutz bei korrodierbaren Materialien erreicht werden.

In einem Vergleich zum bekannten Wasserstrahlschneiden von Werkstücken, bei dem ein Wasserstrahl mit zugemischten Abrasivstoffen unter bedeutend höherem Druck in Bezug auf das obige erfinderische Verfahren verwendet wird, kann bei dem hier benötigten geringen Druck ein einfaches Hydrauliksystem mit flexiblen Hydraulikleitungen verwendet werden. Hieraus ergibt sich auch ein einfaches Verschiebesystem des Bearbeitungsmoduls. Des weiteren ist der starke Verschleiß der Düsen, wie er beim Wasserstrahlschneiden auftritt, nicht vorhanden. Auch bereitet das Abbremsen des Flüssigkeitsstrahls bei der Erfindung keinerlei Schwierigkeiten.

Aus dem Stand der Technik ist als Flüssigkeit für den Flüssigkeitsstrahl lediglich Wasser bekannt. Erst durch das Auffangen, Wiederaufbereiten und Wiederverwendung der den Flüssigkeitsstrahl bildenden Flüssigkeit in einem insbesondere geschlossenen Kreislauf konnten aus Preisgründen andere Flüssigkeiten als Wasser verwendet werden.

Mit der Ausbildung der Flüssigkeitszuleitung bzw. -Zuleitungen flüssigkeitsstauraumfrei im dem Düsenkanal zugeordneten Fokussierkegelspitzenbereich wurde festgestellt werden, daß, sofern das Düsenmaterial und auch die Flüssigkeit aus elektrisch isolierendem Material bestehen, eine elektrische Aufladung der Flüssigkeit des Strahls erfolgt. Die Aufladung ergibt Spannungen von mehr als 5 kV. Wird nun dieser elektrisch aufgeladene Flüssigkeitsstrahl auf das zu schneidende Material gerichtet, so gibt er seine Ladung an dieses Material ab. Wird nun z. B. Kupfer oder Aluminium mit der in einen Flüssigkeitsstrahl eingekoppelten Strahlung eines Nd:YAG- Lasers bearbeitet, so stellt man fest, daß die Materialabtragungsrate stark von der Aufladung des Strahles abhängt.

Bei einer Strahlung eines gepulsten Nd:YAG-Lasers mit 250 mJ, einer Pulsbreite von 0,1 ms und einem Flüssigkeitsdruck von 10 bar erfolgt lediglich eine äußerst geringe Materialablation. Wird nun der Flüssigkeitsdruck auf 100 bar gesteigert, so wird eine ausgezeichnet Abtragungsrate erzielt. Dieser Flüssigkeitsstrahl mit eingekoppelter Laserstrahlung erzeugt nun dank seiner elektrischen Aufladung bedeutend schneller ein Plasma auf dem zu bearbeitenden Material, was dessen Abtragungsrate erhöht. Dieser Effekt läßt sich noch weiter steigern durch eine Erhöhung des Druckes auf z. B. 1000 bar bzw. durch eine gezielte elektrische Aufladung der Flüssigkeit vor dem Düseneintritt.

Desweiteren kann die elektrische Aufladung des Flüssigkeitsstrahls dahingehend genutzt werden, daß dessen Ablenkung mit einem benachbarten elektrischen Feld vorgenommen wird.

Im folgenden werden Beispiele der erfindungsgemäßen Vorrichtung anhand der Zeichnungen näher erläutert. Vorteile der Erfindung ergeben sich aus dem nachfolgenden Beschreibungstext. Es zeigen:
- Fig. 1: ein Blockschema einer Materialbearbeitungsvorrichtung,
- Fig. 2: einen Längsschnitt durch den eine Düse für den Flüssigkeitsstrahl aufweisenden Unterteil des Bearbeitungsmoduls der Materialbearbeitungsvorrichtung, wobei hier zur Kenntlichmachung der Querschnitt der Flüssigkeitszuleitung 35 zum Düsenstein **43** stark vergrößert dargestellt ist, und
- Fig. 3: einen gegenüber **Figur 2** vergrößerten Längsschnitt durch den Düsenstein der Düse sowie die die Flüssigkeit ohne Stauraum zubringenden Flüssigkeitsleitung.

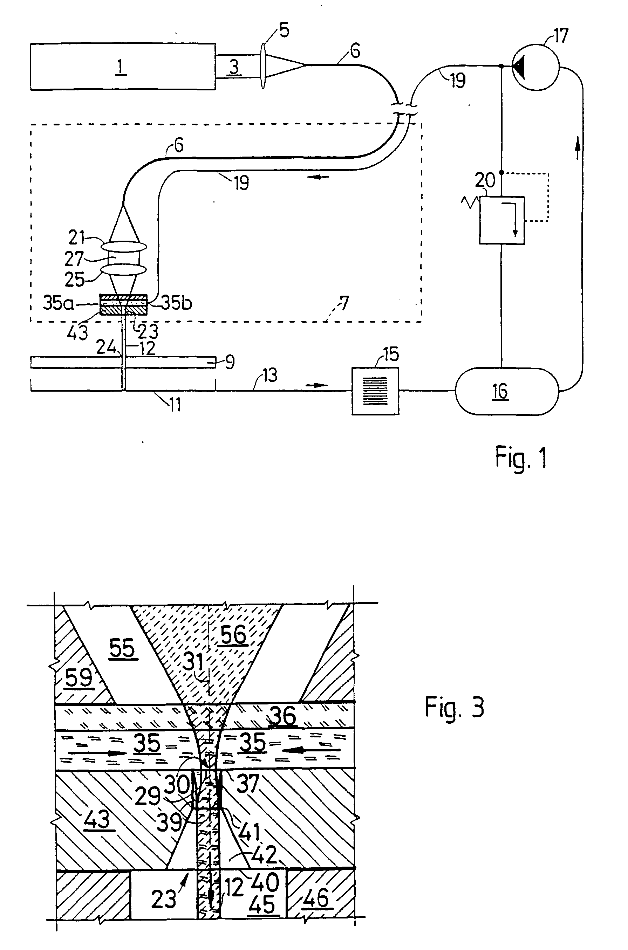

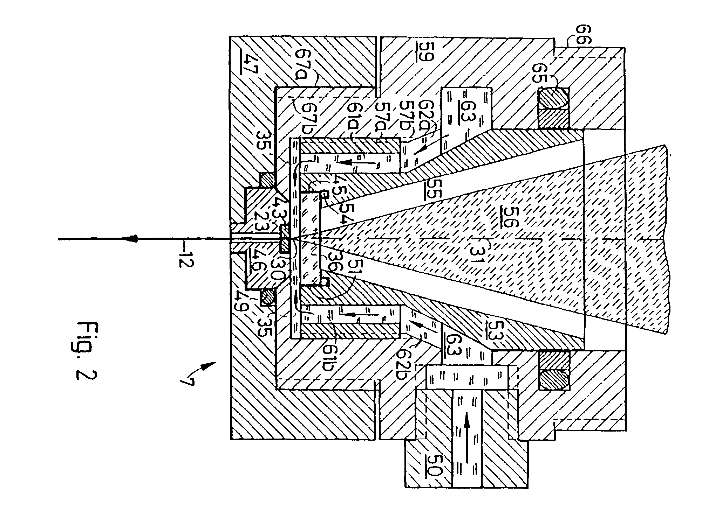

Die in **Figur 1** dargestellte Materialbearbeitungsvorrichtung hat einen ND:YAG Laser **1** als Strahlungsquelle, der einen Laserstrahl **3** mit einer Wellenlänge von 1,064 µm aussendet. Der Laser **1** hat hier eine Leistung von 100 W. Dieser Laserstrahl **3** wird mit einer Fokussiereinheit 5 in einen Strahlungsleiter **6** mit einem typischen Kerndurchmesser von 100 µm bis 600 µm, hier 200 µm, eingekoppelt. Der Kerndurchmesser des Strahlungsleiters **6** wird entsprechend der zu führenden Strahlungsleistung ausgewählt. Er würde z. B. bei einem 500 W Laser 400 µm und bei einem 1 kW Laser 600 µm betragen. Der Strahlungsleiter 6 ist mit einem horizontal und in der Höhe verstellbaren Bearbeitungsmodul **7** zur Materialbearbeitung, auch Nozzle genannt, verbunden. Der Laser 1 braucht aufgrund der Strahlungsleitung über den Strahlungsleiter **6** nicht in unmittelbarer Nähe des zu bearbeitenden Werkstücks **9** bzw. des Bearbeitungsmoduls **7** angeordnet zu sein.

Unterhalb des Bearbeitungsmoduls **7** ist das zu bearbeitende, hier zu schneidende Werkstück **9** angeordnet. Unterhalb des Werkstücks **9** befindet sich ein Auffangbecken **11** für die Flüssigkeit eines durch den hier beispielsweise erzeugten Schnitt strömenden Flüssigkeitsstrahls **12**. Die im Auffangbecken **11** aufzunehmende Flüssigkeit wird mit einem über eine Leitung **13** mit dem Auffangbecken **11** verbundenes Filter **15** gereinigt und dann in ein Reservoir **16** eingeleitet, aus dem sie dann mittels einer Pumpe **17** über eine Leitung **19** zum Bearbeitungsmodul **7** zurückgeführt wird. Die Leitung **19** ist am Pumpenausgang über ein Überdruckventil **20** aus Sicherheitsgründen und zur Druckeinstellung in der Leitung **19** mit dem Reservoir **16** verbunden.

Das Bearbeitungsmodul **7** hat einen Kollimator **21** zur Kollimierung der mit dem Strahlungsleiter **6** herangeführten Laserstrahlung, einen Düsenstein **43** mit einem Düsenkanal **23** zur Formung des gegen den Bearbeitungsort **24** auf dem Werkstück **9** gerichteten Flüssigkeitsstrahls **12** sowie eine Fokussierlinse **25** zur Fokussierung des kollimierten Laserstrahls **27** in die Ebene **29** der Eingangsöffnung **30** am Ort der Düsenachse **31** des Düsenkanals **23** des Düsensteins **43,** wie in **Figur 3** vergrößert dargestellt ist. Oberhalb der Düseneingangsöffnung **30** ist ein scheibenförmiger Flüssigkeitszuführraum **35** als Flüssigkeitszuführleitung vorhanden. Der Flüssigkeitszuführraum **35** weist in der Umgebung der Düseneingangsöffnung **30** keinen als Stauraum wirkenden Flüssigkeitsraum auf. Die Höhe des Flüssigkeitszuführraums **35** müßte theoretisch lediglich den halben Querschnitt des Düsenkanals **23** aufweisen. Sie wurde jedoch zur Reduzierung des Rohrreibungsverlusts der Flüssigkeit sowie zur Vermeidung von Verwirbelungen etwas größer gewählt. In die Wandung des Flüssigkeitszuführraums **35** ist oberhalb der Düseneintrittsöffnung **30** ein bevorzugt antireflex vergütetes Fenster **36** eingesetzt, durch welches die Laserstrahlung mit der Fokussierlinse **25** in die Ebene **29** der Eingangsöffnung **30** des Düsenkanals **23** fokussierbar ist.

Der Rand **37** der Düseneingangsöffnung **30** ist scharfkantig mit einem Radius kleiner 50 µm, bevorzugt kleiner 5 µm ausgebildet. Infolge dieses scharfkantigen Rands **37** bildet sich eine Ablösung des Flüssigkeitsstrahls vom oberen Düsenrand **37** mit einem darunterliegenden Luftpolster **39** aus. Da Luft einen kleineren Brechungsindex hat als die üblichen zu verwendenden Düsenmaterialien wie Quarz oder Saphir und auch der Brechungsindex von Luft kleiner ist als derjenige des verwendeten Silikonöls als bevorzugte Flüssigkeit, bildet sich der Flüssigkeitsstrahl **12** als ein nahezu idealer Strahlungsleiter aus. Auf die Auswirkungen der unterschiedlichen Brechungsindizes von Düsenmaterial und Flüssigkeit sei auf die Ausführungen in der Beschreibungseinleitung hingewiesen. Die Düsenaustrittsöffnung **40** ist gegenüber der Eintrittsöffnung **30**, beginnend bereits im oberen Düsenkanaldrittel **41**, erweitert. Durch diese Erweiterung **42** wird eine Verwirbelung des im Düsenkanal **23** befindlichen Luftpolsters **39** vermieden.

Der den Flüssigkeitsstrahl **12** formende Düsenkanal **23** des "Düsensteins" **43** ist, wie in **Figur 2** dargestellt, in einem eine zentrische Durchgangsbohrung **45** für den Flüssigkeitsstrahl **12** aufweisenden Düsensteinhalter **46** in einem Bodenelement **47** des Bearbeitungsmoduls **7** gehalten. Die Abdichtung erfolgt seitlich durch einen Dichtring (O-Ring) **49.** Die die Flüssigkeit zuführende Leitung **19** ist an einem Flansch **50** anflanschbar.

Das Fenster **36** ist in einer zentrischen Ausnehmung **51** eines Einsatzes **53** angeordnet. Die Abdichtung des Fensters **36** gegenüber dem Einsatz **53** erfolgt ebenfalls mit einem Dichtring **54**. Es kann auch eingeklebt werden. Der Einsatz **53** weist einen konischen Innenraum **55** auf, dessen Konizität dem Fokussierkegel **56** der mit der Fokussierlinse **25** zu fokussierenden Laserstrahlung angepaßt ist. Der Einsatz **53** hat ferner ein Außengewinde **57a**, mit dem er in ein Innengewinde **57b** eines Grundkörperunterteils **59** des Bearbeitungsmoduls 7 eingeschraubt ist. Der Einsatz **53** hat mehrere koaxial verteilte, axiale Flüssigkeitskanäle **61a** und **61b**, deren Breite derart gewählt ist, daß sie die Flüssigkeit sicher in den Flüssigkeitszuführraum **35** überleiten. Die Höhe des Flüssigkeitszuführraums **35** wird durch die Einschraubtiefe des Einsatzes **53** eingestellt. Die Flüssigkeitskanäle **61a** und **61b** könnten auch entgegen der Darstellung in **Figur 2** als vom Außengewinde **57a** ausgehende Schlitze ausgebildet sein. Die Flüssigkeitskanäle **61a** und **61b** münden mittels je eines Übergangskanals **62a** bzw. **62b** in einen koaxial zur Düsenachse **31** im Grundkörperunterteil **59** verlaufenden Ringkanal **63**, der mit dem Flansch **50** verbunden ist. Der Einsatz **53** ist nach oben durch eine weitere Dichtung **65** abgedichtet. Der Grundkörperunterteil **59** ist in den nicht explizit dargestellten Grundkörper des Bearbeitungsmoduls **7** über ein Außengewinde **66** einschraubbar.

Das Bodenelement **47** weist ein Innengewinde **67a** auf, mit dem es auf ein Außengewinde **67b** des Grundkörperunterteils **59** aufschraubbar ist. Da der Düsensteinhalter **46** mit dem Düsenstein **43** lediglich in das Bodenelement **47** eingesetzt ist, ist ein rasches Auswechseln des Düsensteins **43** möglich, falls z. B. ein Flüssigkeitsstrahl **12** mit einem anderen Strahlquerschnitt verwendet oder er ausgewechselt werden soll.

Anstelle von Wasser und Silikonölen können auch andere Flüssigkeiten sowie (echte bzw. kolloidale) Lösungen von Stoffen gemäß den obigen Bedingungen verwendet werden.

Statt den Flüssigkeitszuführraum **35** scheibenförmig auszubilden, kann er auch kegelförmig mit einem spitzen Halbwinkel hergestellt werden, wobei der Winkelscheitel (Kegelspitze) dann über der Düseneingangsöffnung zu liegen kommt. Das Fenster **36** ist dann keine planparallele Platte mehr, sondern weist an der der Düseneingangsöffnung zugewandten Seite eine Pyramidenspitze und an der entgegengesetzten Seite eine sphärische Kontur auf, um die zerstreuende Wirkung der Pyramidenspitze auszugleichen. Durch diese Ausgestaltung ergibt sich eine bessere Anströmung des Düseneingangs.

Beim Schneiden von Sandwich-Strukturen wird bevorzugt das Werkstück **9** oder das Bearbeitungsmodul **7** nur schrittweise bewegt. Jedes der einzelnen Strukturelemente kann dann nacheinander mit aufeinanderfolgenden Pulsen durchtrennt werden.

## Patentansprüche

1. Verfahren zur Materialbearbeitung mit einem die Strahlung eines fokussierten Laserstrahls **(3)** führenden, auf ein zu bearbeitendes Werkstück **(9)** zu richtenden Flüssigkeitsstrahl **(12)**, der mit einer Düse **(43)** geformt wird, **dadurch gekennzeichnet, daß** der Strahlungsfokuspunkt zum Einkoppeln des Laserstrahls **(3)** in den Flüssigkeitsstrahl **(12)** in die Ebene der Eingangsöffnung des Düsenkanals **(23)** gelegt und die Flüssigkeit in der Umgebung der Düseneingangsöffnung stauraumfrei geführt wird, damit - bei vorgegebenem niedrigen Strahlungsabsorptionskoeffizient der Flüssigkeit -die Strömungsgeschwindigkeit der Flüssigkeit im Fokussierkegelspitzenbereich **(56)** der Strahlung ausreichend hoch festgelegt wird, daß im Fokussierkegelspitzenbereich **(56)** die Bildung einer thermischen Linse soweit unterdrückt wird, daß kein Strahlungsteil die Düsenwandung beschädigt.

2. Verfahren nach Anspruch 1, **dadurch gekennzeichnet, daß** der am Düseneingang **(30)** geformte Flüssigkeitsstrahl **(12)** unmittelbar nach seiner Strahlformung mit einem Luftpolster **(39)** umgeben wird und somit von der Düsenwand "isoliert" ist.

3. Verfahren nach Anspruch 1 oder 2, **dadurch gekennzeichnet, daß** als Flüssigkeit ein Silikonöl, insbesondere aus der Gruppe der Polymethysiloxane und eine Laserstrahlung mit einer Wellenlänge zwischen 0,25 µm und 2,1 µm verwendet wird.

4. Verfahren nach einem der Ansprüche 1 bis 3, **dadurch gekennzeichnet, daß** die bei der Materialbearbeitung eines Werkstücks **(9)** aus dessen Durchbruch **(24)** hindurchtretende und/oder von diesem abfließende Flüssigkeit des Flüssigkeitsstrahls **(12)** aufgefangen, gefiltert und zur Düse **(43)** zurückgebracht wird.

5. Vorrichtung zur Durchführung des Verfahrens nach einem der Ansprüche 1 bis 4 mit einem Laser **(1)** zum Aussenden eines Laserstrahls **(3)**, einer Flüssigkeit und einem Bearbeitungsmodul **(7)** mit einer Düse **(43)** mit einem Düsenkanal **(23)** zur Formung eines Flüssigkeitsstrahls **(12)** und einem optischen Element **(21, 25)** zum Einkoppeln des Laserstrahls **(3)** in den Flüssigkeitsstrahl **(12), dadurch gekennzeichnet, daß** das optische Element **(21, 25)** den Laserstrahl **(3)** in die Eingangsöffnungsebene **(29)** des Düsenkanals **(43)** fokussiert und eine Flussigkeitszuführleitung für den Düsenkanal **(43)** oberhalb der Düseneingangsöffnung flüssigkeitsstauraumfrei ausgebildet ist, damit - bei vorgegebenem niedrigen Strahlungsabsorptionskoeffizient der Flüssigkeit - die Strömungsgeschwindigkeit der Flüssigkeit im Fokussierkegelspitzenbereich **(56)** der Strahlung ausreichend hoch vorgebbar ist, so daß im Fokussierkegelspitzenbereich **(56)** die Bildung einer thermischem Linse in der Flüssigkeit soweit unterdrückt ist, daß kein Strahlungsteil die Düsenkanalwandung beschädigt.

6. Vorrichtung nach Anspruch **5**, **gekennzeichnet durch** eine für die Laserstrahlung transparente, den Flüssigkeitsfluß nicht verändernde Abdeckung **(36)** als Wandung der Flüssigkeitszuführleitung bzw. -leitungen **(35)** in unmittelbarer Nähe des Düsenkanals **(23).**

7. Vorrichtung nach Anspruch **5** oder **6**, **dadurch gekennzeichnet, daß** wenigstens die mit der Flüssigkeit in Verbindung stehenden Oberflächen des Düsenkanals **(23)** und des Bereichs der Düsenöffnung **(30)** sowie die Flüssigkeit elektrisch isolierend sind und die Strömungsgeschwindigkeit der Flüssigkeit im Bereich der Düsenöffnung (30) und des Düsenkanals **(23)** derart hoch gewählt ist, daß eine elektrische Aufladung des Flüssigkeitsstrahls erfolgt, um die Materialabtragungsrate zu erhöhen.

8. Vorrichtung nach einem der Ansprüche 5 bis 7, **dadurch gekennzeichnet, daß** der Flüssigkeitseintrittsrand **(37)** des Düsenkanals **(23)** scharfkantig, bevorzugt mit einem Radius kleiner 50 µm, insbesondere kleiner 5 µm ausgebildet ist.

9. Vorrichtung nach einem der Ansprüche 5 bis 8, **dadurch gekennzeichnet, daß** die Düsenaustrittsöffnung **(40)** gegenüber der Eintrittsöffnung **(30)** erweitert ist und eine Erweiterung des Düsenkanals **(23)** bevorzugt bereits in dessen oberem Drittel beginnt.

10. Vorrichtung nach einem der Ansprüche 5 bis 9, **gekennzeichnet durch** einen Strahlungsleiter **(6)** zur Zuführung der Laserstrahlung von einem bevorzugt räumlich entfernt sich befindenden Laser **(1)** zur Fokussiereinheit **(21, 25).**

11. Vorrichtung nach einem der Ansprüche 5 bis 10, **dadurch gekennzeichnet, daß** die Flüssigkeit ein Silikonöl, insbesondere aus der Gruppe der Polymethylsiloxane ist, und die Laserstrahlung im Wellenlängenbereich zwischen 0,25 µm und 2,1 µm liegt.

12. Vorrichtung nach einem der Ansprüche 5 bis 11, **gekennzeichnet durch** ein Auffangbecken **(11)** zum Auffangen der bei einer Materialbearbeitung aus einem Werkstückdurchbruch hindurchtretenden und/oder von dem Werkstück abfließenden Flüssigkeit und eine Pumpe **(17)** mit einer Filtereinheit **(15)**, mit der die aus den Auffangbecken **(11)** abpumapbare Flüssigkeit gereinigt zum Düsenkanal **(23)** zurückbringbar ist.

13. Vorrichtung nach einem der Ansprüche 5 bis 12, **gekennzeichnet durch** ein Kupplungselement **(66, 50)**, mit dem das Bearbeitungsmodul **(7)** an eine räumlich veränderbare Verstelleinheit, insbesondere einen Knickarmroboter sowie an eine Flüssigkeits- und/oder Strahlungszuführung anbaubar ist.

## Claims

1. Method for machining material with a fluid jet (12) which guides the radiation of a focused laser beam (3), is to be directed at a workpiece (9) to be machined and is formed by a nozzle (43), **characterised in that**, for coupling the laser beam (3) into the fluid jet (12), the radiation focal point is located in the plane of the inlet opening of the nozzle channel (23) and the fluid is guided in the area surrounding the nozzle inlet opening without a stagnation space, so that - with a predetermined low radiation absorption coefficient of the fluid - the flow speed of the fluid in the focusing cone apex region (56) of the radiation is set at a sufficiently high level to suppress the formation of a thermal lens in the focusing cone apex region (56) to an extent such that no part of the radiation damages the nozzle wall.

2. Method according to Claim 1, **characterised in that** the fluid jet (12) which is formed at the nozzle inlet (30) is surrounded by an air cushion (39) immediately after forming and therefore "isolated" from the nozzle wall.

3. Method according to Claim 1 or 2, **characterised in that** the fluid which is used is a silicone oil, in particular from the polymethyl siloxane group, and the laser radiation which is used has a wavelength of between 0.25 µm and 2.1 µm.

4. Method according to any one of Claims 1 to 3, **characterised in that** the fluid of the fluid jet (12) passing out of the aperture (24) of a workpiece (9) and/or flowing away from the latter when machining material is collected, filtered and returned to the nozzle (43).

5. Device for carrying out the method according to any one of Claims 1 to 4, with a laser (1) for emitting a laser beam (3), a fluid and a machining module (7) with a nozzle (43) comprising a nozzle channel (23) for forming a fluid jet (12) and an optical element (21, 25) for coupling the laser beam (3) into the fluid jet (12), **characterised in that** the optical element (21, 25) focuses the laser beam (3) into the inlet opening plane (29) of the nozzle channel (43), and a fluid feed line for the nozzle channel (43) is formed above the nozzle inlet opening without a stagnation space, so that - given a predetermined low radiation absorption coefficient of the fluid - the flow speed of the fluid in the focusing cone apex region (56) of the radiation can be predetermined at a sufficiently high level to suppress the formation of a thermal lens in the fluid in the focusing cone apex region (56) to an extent such that no part of the radiation damages the nozzle channel wall.

6. Device according to Claim 5, **characterised by** a cover (36) which is transparent to the laser radiation and does not vary the fluid flow, as a wall of the fluid feed line or lines (35) in the immediate vicinity of the nozzle channel (23).

7. Device according to Claim 5 or 6, **characterised in that** at least the surfaces of the nozzle channel (23) and of the region of the nozzle opening (30) which communicate with the fluid, as well as the fluid, are electrically insulating, and the flow speed of the fluid in the region of the nozzle opening (30) and of the nozzle channel (23) is selected so that it is at a level which results in the fluid jet being electrically charged in order to increase the material removal rate.

8. Device according to any one of Claims 5 to 7, **characterised in that** the fluid entrance rim (37) of the nozzle channel (23) is sharp-edged, preferably with a radius of less than 50 µm, in particular less than 5 µm.

9. Device according to any one of Claims 5 to 8, **characterised in that** the nozzle exit opening (40) is widened with respect to the entrance opening (30), and the nozzle channel (23) preferably starts to widen in its top third.

10. Device according to any one of Claims 5 to 9, **characterised by** a radiation conductor (6) for feeding the laser radiation from a laser (1), which is preferably distant in space, to the focusing unit (21, 25).

11. Device according to any one of Claims 5 to 10, **characterised in that** the fluid is a silicone oil, in particular from the polymethyl siloxane group, and the laser radiation lies in the wavelength range between 0.25 µm and 2.1 µm.

12. Device according to any one of Claims 5 to 11, **characterised by** a collecting basin (11) for collecting the fluid passing out of a workpiece aperture and/or flowing away from the workpiece when machining material, and a pump (17) with a filter unit (15), by means of which the fluid which can be pumped out of the collecting basin (11) can be returned in a purified state to the nozzle channel (23).

13. Device according to any one of Claims 5 to 12, **characterised by** a coupling element (66, 50), by means of which the machining module (7) can be attached to an adjusting unit, in particular a buckling arm robot, which can be varied in space, as well as to a fluid and/or radiation feed system.

## Revendications

1. Procédé pour l'usinage d'un matériau à l'aide d'un jet de liquide (12), qui guide le rayonnement d'un faisceau laser focalisé (3), doit être dirigé sur une pièce à usiner (9) et est formé par une buse (43), **caractérisé en ce que** le foyer du rayonnement est placé, pour l'injection du faisceau laser (3) dans le jet de liquide (12), dans le plan de l'ouverture d'entrée du canal (23) de la buse et le liquide est guidé sans espace de retenue dans l'environnement de l'ouverture d'entrée de la buse afin que - dans le cas d'un coefficient d'absorption de rayonnement faible prédéterminé du liquide - la vitesse du liquide dans la zone (56) de la pointe du cône de focalisation du rayonnement soit fixée à une valeur suffisamment élevée, que la formation d'une lentille thermique est empêchée dans la zone (56) de la pointe du cône de focalisation, de telle sorte qu'aucune partie du rayonnement n'endommage la paroi de la buse.

2. Procédé selon la revendication 1, **caractérisé en ce que** le jet de liquide (12), qui est formé à l'entrée (30) de la buse, est entouré directement après sa formation, par un coussin d'air (39) et par conséquent est "isolé" vis-à-vis de la paroi de la buse.

3. Procédé selon la revendication 1 ou 2, **caractérisé en ce qu'**on utilise comme liquide une huile au silicone, notamment du groupe des polyméthylsiloxanes, et un rayonnement laser possédant une longueur d'onde comprise entre 0,25 µm et 2,1 µm.

4. Procédé selon l'une des revendications 1 à 3, **caractérisé en ce que** le liquide du jet de liquide (12), qui, dans le cas de l'usinage du matériau d'une pièce à usiner (9), traverse le perçage (24) de cette dernière et/ou sort de ce perçage, est collecté, filtré et renvoyé à la buse (43).

5. Dispositif pour la mise en oeuvre du procédé selon l'une des revendications 1 à 4, comportant un laser (1) servant à émettre un faisceau laser (3), un liquide et un module d'usinage (7) comportant une buse (43) possédant un canal (23) pour former un jet de liquide (12), et un élément optique (21,25) pour l'injection du faisceau laser (3) dans le jet de liquide (12), **caractérisé en ce que** l'élément optique (21,25) focalise le faisceau laser (3) dans le plan d'ouverture d'entrée (29) du canal de la buse (43)et une canalisation d'amenée de liquide pour le canal de la buse(43) est formée sans espace de retenue de liquide de l'ouverture d'entrée de la buse, afin que - pour le coefficient d'absorption de rayonnement prédéterminé du liquide - la vitesse d'écoulement du liquide peut encore être prédéterminée d'une manière suffisante dans la zone (56) de la pointe du cône de focalisation du rayonnement de telle sorte que dans la zone (56) de la pointe du cône de focalisation, la formation d'une lentille thermique dans le liquide est supprimée de telle sorte qu'aucune partie du rayonnement n'endommage la paroi du canal de la buse.

6. Dispositif selon la revendication 5, **caractérisé par** un capot (36), qui est transparent pour le rayonnement laser et ne modifie pas le flux du liquide, en tant que paroi de la ou des canalisations d'amenée de liquide (35), à proximité directe du canal (23) de la buse.

7. Dispositif selon la revendication 5 ou 6, **caractérisé en ce qu'**au moins les surfaces, qui sont en contact avec le liquide, du canal (23) de la buse et de la zone d'ouverture (30) de la buse ainsi que le liquide sont électriquement isolants et que la vitesse d'écoulement du liquide dans la zone de l'ouverture (30) de la buse et du canal (23) de la buse est choisie de telle sorte qu'il se produit une charge électrique du jet de liquide de manière à accroître la vitesse d'enlèvement de la matière.

8. Dispositif selon les revendications 5 à 7, **caractérisé en ce que** le bord (37) d'entrée du liquide du canal (23) de la buse est agencé à arête vive, de préférence avec un rayon inférieur à 50 µm et notamment inférieur à 5 µm.

9. Dispositif selon l'une des revendications 5 à 8, **caractérisé en ce que** l'ouverture (40) de sortie de la buse est élargie par rapport à l'ouverture d'entrée (30) et qu'un élargissement du canal (23) de la buse commence de préférence déjà dans le tiers supérieur de ce canal.

10. Dispositif selon l'une des revendications 5 à 9, **caractérisé par** un dispositif (6) de guidage du rayonnement servant à amener le rayonnement laser depuis un laser (1) qui de préférence est disposé dans une position spatialement éloignée, jusqu'à l'unité de focalisation (21, 25).

11. Dispositif selon l'une des revendications 5 à 10, **caractérisé en ce que** le liquide est une huile au silicone, notamment du groupe des polyméthylsiloxanes, et que le rayonnement laser se situe dans la gamme des longueurs d'onde comprises entre 0,25 µm et 2,1 µm.

12. Dispositif selon l'une des revendications 5 à 11, **caractérisé par** un bassin de collecte (11) servant à collecter le liquide qui lors de l'usinage d'un matériau traverse un passage de la pièce à usiner et/ou s'évacue de la pièce à usiner, et une pompe (17) comportant une unité de filtre (15), au moyen de laquelle le liquide pouvant être pompé à partir du bassin de collecte (11), peut être ramené à l'état nettoyé au canal (23) de la buse.

13. Dispositif selon l'une des revendications 5 à 12, **caractérisé par** un élément de couplage (66,50) au moyen duquel le module d'usinage (7) peut être monté sur une unité de réglage variable dans l'espace, notamment un robot à bras coudé, ainsi que sur un dispositif d'amenée du liquide et/ou du rayonnement.
